# EUROPEAN PATENT SPECIFICATION

(11) **EP 4 399 789 B1**
(45) Date of publication and mention of the grant of the patent: **01.10.2025**
(21) Application number: 22751023.7
(22) Date of filing: 12.07.2022
(51) Int. Cl.: H02K 3/04, H02K 11/33, H02K 3/28, H02K 3/50

(54) **ELECTRIC DRIVE**
ELEKTRISCHER ANTRIEB
MOTEUR ÉLECTRIQUE

(30) Priority: 10.11.2021 EP 21207491
(43) Date of publication of application: 17.07.2024
(73) Proprietor: Innomotics GmbH, 90441 Nürnberg (DE)
(72) Inventor: ROBINSON, Jonathan, 5611 BG Eindhoven (NL)
(74) Representative: Michalski Hüttermann & Partner Patentanwälte mbB
(86) International application number: PCT/EP2022/069413
(87) International publication number: WO 2023/083505

(56) References cited:
- DE-A1- 10 309 147
- DE-A1- 102005 032 965
- DE-A1- 102019 102 351
- US-A1- 2016 105 063
- US-A1- 2020 295 633

## Description

The present invention relates to a power converter for an electric drive, particularly a low-voltage multipole motor.

Multipole low voltage drives offer benefits like being able to reduce the motor size. When the supply voltage is low however, the motor requires a high current, leading to cable losses when the transformer is some distance from the drive, as well requiring a transformer with a very high secondary current rating. A suitable low voltage and high current supply is difficult to build and can offset some of the advantages of the motor.

US 10,566,922 B2 proposes to use a power supply with an output voltage that is higher than required for each motor pole. Separate pole groups are connected in series across the DC link. A disadvantage of the proposed solution is the amount of wiring necessary, particularly the wiring needed for the connection of the neutral points back to the DC link.

DE102005032965 A1, US2016/105063 A1, DE10309147 A1, US2020/295633 A1, DE102019102351 A1 disclose electrical drives of the state of the art.

It is an object of the present invention to provide an improved electric drive, particularly a low-voltage multipole motor having a reduced amount of wiring.

The electric drive according to the invention comprises a rotor and a stator. The stator comprises a plurality of field conductors for generating a magnetic field for conveying a torque to the rotor.

The electric drive further comprises one or more first inverters. Each of the first inverters comprises two DC terminals and at least two field conductor terminals. Each field conductor terminal is connected to a first terminal of one or more of the field conductors. The first inverters are arranged at a first axial end of the stator.

The electric drive further comprises one or more second inverters, each of which comprises two DC terminals and at least two second field conductor terminals. Each second field conductor terminal is connected to a second terminal of one or more of the field conductors. The second inverters are arranged at a second axial end of the stator, wherein the second axial is opposite from the first axial end.

The first and second axial ends of the stator are understood to be the space at the end of the stator in the direction and close to the axis of rotation of the rotor. With the stator usually having a roughly cylindrical shape, the first axial end is the space at the first cap of this cylindrical form while the second axial end is the space at the second cap of this cylindrical form. It is possible that the rotor passes through this space on one or both sides. While the rotor is typically arranged inside the stator, it may also be arranged on the outside of stator; in this case it will usually surround the stator radially.

Advantageously, the second inverters remove the need for wiring needed for the connection of the field conductors or neutral points back to the DC link. Instead, only the DC link must be wired across the stator to supply the second inverters' DC terminals. This is a fixed amount of wiring that is independent of the number of field conductors. In cases with a large number of pole groups (for a high power motor) this can be a significant saving in wiring and complexity as well as parasitics leading to common mode currents. While both DC links would need to be connected to the supply, the current rating is half for each and would not lead to additional cost, especially for such a high current link which could require multiple conductors.

Further features that may be added alone or together in exemplary embodiments of the invention include:
The field conductors may be bars, particularly bars that are physically arranged in parallel. As the bars do not wind back towards one axial side of the motor, the invention is particularly advantageous when using bars as field conductors.

The first and second inverters each comprise one or more half-bridges of controllable semiconductor switches and one capacitor series of two capacitors. The half-bridges and the capacitor series are arranged between the DC terminals and in a parallel connection. The midpoints of the half-bridges and the midpoint of the capacitor series each form a field conductor terminal. This setup may be called a half-bridge setup.

Those field conductor terminals that are connected to controllable semiconductor switches will be called AC terminals. In this setup, each field conductor is preferably connected to one such AC terminal on one side and field conductor terminal formed by capacitors on the other side. In this setup, it is further preferred that each AC terminal is only connected to a single field conductor.

Alternatively, as a full-bridge setup, the first and second inverters each comprise two or more half-bridges of controllable semiconductor switches, wherein the half-bridges are arranged between the DC terminals and in a parallel connection and wherein the midpoint of the half-bridges each form a field conductor terminal. It should be noted that for the same number of field conductors, the full-bridge setup requires more half-bridges of controllable semiconductor switches than the half-bridge setup.

Since all field conductor terminals in this setup are connected to controllable semiconductor switches, all are AC terminals. In this setup, each field conductor is preferably connected to one such AC terminal on each side. Additionally, it is preferred that each AC terminal is only connected to a single field conductor. In this case the electric drive has an equal number of field conductors, field conductor terminals and second field conductor terminals.

In both the half-bridge and the full-bridge setup it is preferred that the inverters are built identically.

In the full-bridge setup, a first of the half-bridges of controllable semiconductor switches connected to a field conductor is operated with pulse width modulation switching, while a second of the connected half-bridges, i.e., the half-bridge connected on the other side of the field conductor is switched at a fundamental frequency of the AC voltage supplied by the inverters. The pulse width modulation switching will operate with frequencies that are above 1 kHz and particularly above 10 kHz. The fundamental frequency is the frequency of the AC output of the inverters and will typically be lower, particularly much lower than the frequency of pulse width modulation. The fundamental frequency may be tied to the rotation speed of the motor. In this way, the two half-bridges can be optimized independently, one side for higher switching losses, the other side for mainly conduction losses.

The electric drive may comprise at least six, particularly at least 12, particularly at least 24 field conductors. The higher the number of field conductors, the more prominent will be the advantage of having to connect only the DC link across the stator instead of the field conductors.

The electric drive may comprise at least two of said inverters and an equal number of said second inverters, wherein said inverters form a first series with their DC terminals and wherein said second inverters form a second series with their DC terminals. The inverters are understood to be forming a series with their DC terminals by their DC terminals being connected in a series connection.

The inverters may thus be considered stacked so that the DC terminals of the series connection, that is, the DC- terminal of the lowest (last) inverter in the series and the DC+ terminal of the highest (first) inverter in the series, require a DC link supply voltage of n times the voltage that each inverter requires as a DC supply wherein n is the number of inverters in the series.

In this way the DC link supply voltage that needs to be generated from a grid or other supply of the electric drive is higher than the typically low supply voltage of the field conductors and thus the individual inverter and the required current is proportionally lower, simplifying the required power conversion.

With stacked inverters, each field conductor is preferably connected between a field conductor terminal of a first inverter and a second field conductor terminal of a second inverter, wherein the inverter and second inverter occupy the same position in their respective series.

The electric drive preferably comprises an AC/DC converter arrangement, wherein the DC terminals of the AC/DC converter arrangement are connected to DC terminals of said first series and said second series. AC/DC converter arrangement generates the supply voltage of the DC link and thus of the inverters.

The AC/DC converter arrangement may comprise two AC/DC converters arranged in parallel and connected to a multi-winding transformer with their AC terminals. In this way the high current requirement can be more easily fulfilled.

It is to be understood that in some embodiments the elements described as "semiconductor switches" of the power converter are individual semiconductor elements, i.e. single switches each. In other embodiments some or each of the elements described as "semiconductor switches" of the power converter are multiple switches arranged in a parallel or serial connection and acting together as if they were a single switch of enhanced voltage rating or current capability.

Embodiments of the present invention are now described with reference to the accompanying drawings to which the invention is not limited. The illustrations of the drawings are in schematic form. It is noted that in different figures, similar or identical elements use the same reference signs.
Fig. 1 illustrates an embodiment of a low-voltage electric drive in an isometric view;
Fig. 2 illustrates circuit boards of the electric drive;
Fig. 3 illustrates the electrical setup of the electric drive;
Figs. 4 and 5 show details for two designs for the inverters of the electric drive used to drive its field conductors;
Figs. 6 and 7 show simulation results for the designs of figs. 4 and 5.

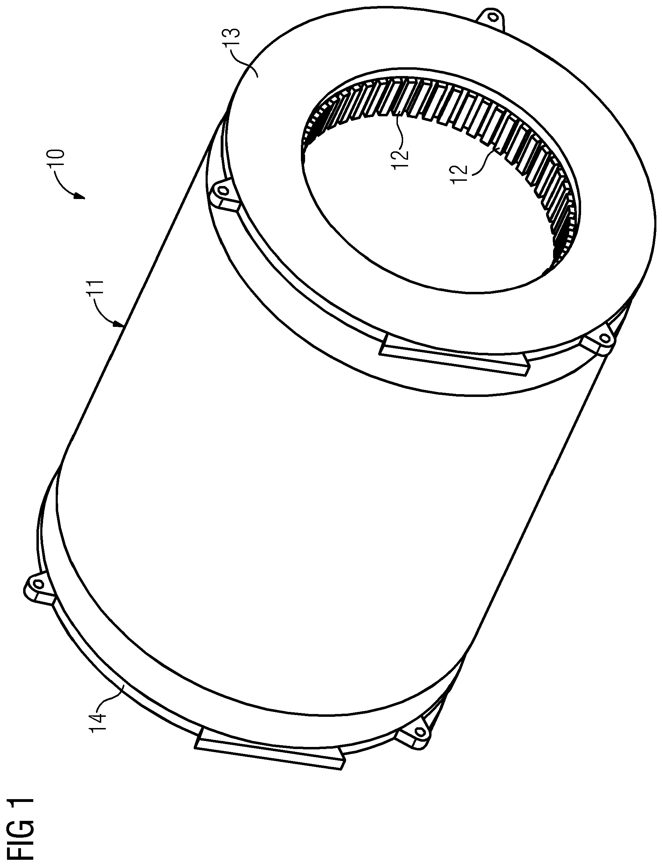

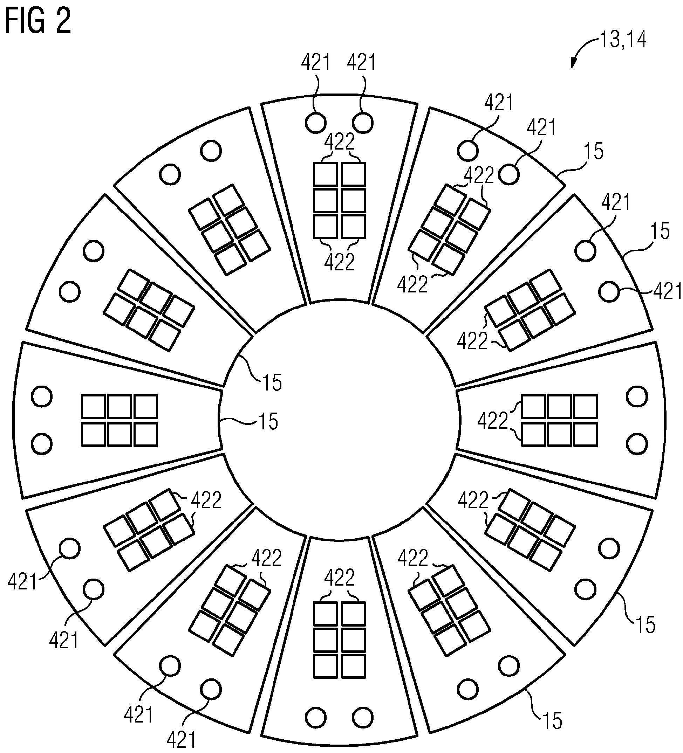

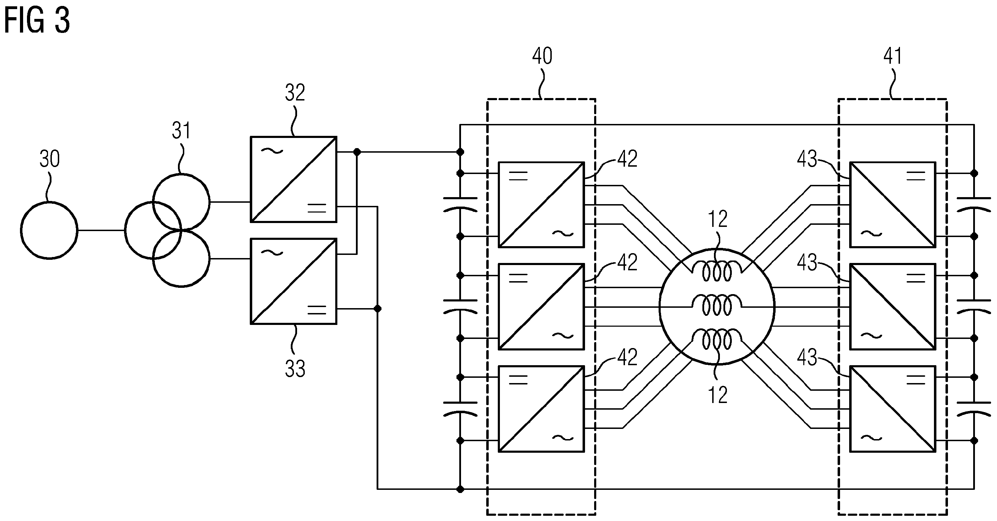

Figs. 1 through 3 illustrate a low-voltage electric drive 10 according to a first embodiment of the invention. While fig. 1 shows elements of the physical embodiment of electric drive 10 in an isometric view and fig. 2 shows circuit boards 20 of the electric drive 10 in more detail, fig. 3 is a diagram of the accompanying electric circuit of electric drive 10.

Fig. 1 gives a schematic and simplified impression of some elements of electric drive 10. Electric drive 10 comprises a stator 11 and a rotor arranged substantially within the stator 11. The rotor is not shown in fig. 1, nor is the housing of electric drive 10. The stator 11 comprises field conductors 12. The field conductors 12 of this electric drive 10 are built as straight bars instead of the usual windings. The inverters driving the field conductors 12 are arranged on a first circuit board assembly 13 and on a second circuit board assembly 14. The first circuit board assembly 13 is arranged on one axial end of the stator 11, while the second circuit board assembly 14 is arranged on the opposite axial end of the stator 11.

Fig. 2 shows a schematic view of the first and second circuit board assemblies 13, 14. The circuit board assemblies 13, 14 comprise a plurality of circuit boards 15 where each of the circuit boards 15 is in the shape of a ring sector. The circuit boards 15 are arranged to form a ring shape. Each circuit board 15 carries multiple controllable switches 422 and capacitors 421 that form inverters for applying an AC voltage to the field conductors 12.

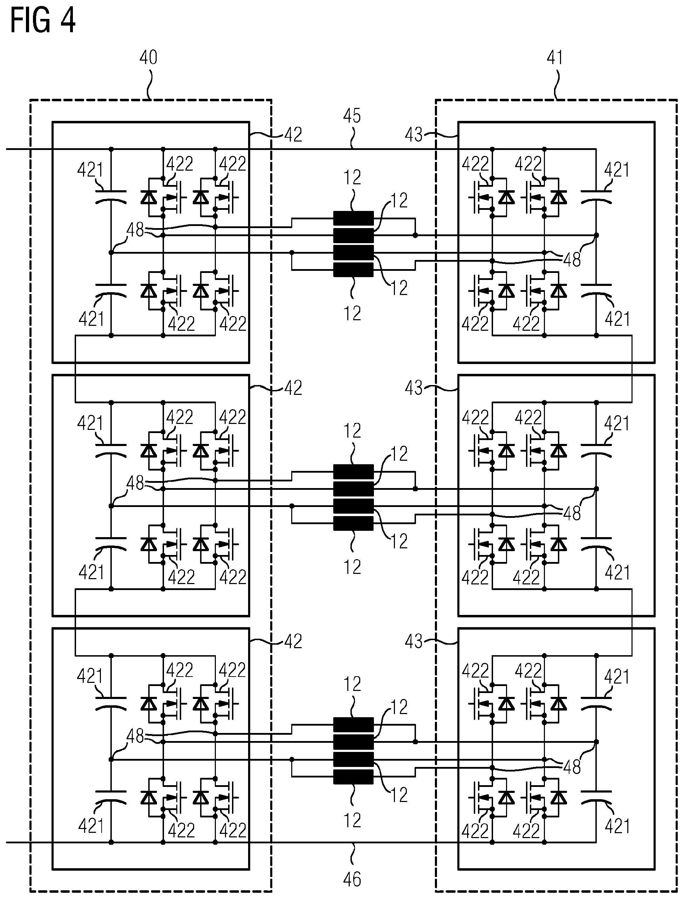

The electrical setup of electric drive 10 is shown in more detail in figs. 3 and 4. Fig. 3 gives an overview of the electrical setup while fig. 4 shows in more detail the inverters supplying the field conductors 12. The electric drive 10 is supplied from the electric grid 30. This supply is typically in the form of a three-phase voltage and may be a medium voltage, typically of several kV or a low voltage, which may typically be in the range from 100 V to 1000 V. The supply voltage is transformed down in multi-winding transformer 31 which in turn supplies two rectifiers 32, 33 which form a parallel circuit. The target voltage of the multi-winding transformer 31 depends on the requirements of the motor, which typically requires high current and voltage less than 200 V, depending on the power of the motor. It is possible to supply the voltage directly from a low voltage grid and without a transformer, but the grid must be able to support the high current demand from the motor.

The output of the rectifiers supplies a first stack 40 of first inverters 42 and a second stack 41 of second inverters 43. The stacks 40, 41 form a parallel circuit. The first inverters 42 form a series circuit that is the first stack 40 while the second inverters 43 form a series circuit that is the second stack 41.

The inverters 42, 43 form a series circuit by their supply-side DC terminals being connected in series. The first inverters 42 of the first stack 40 are arranged on the first circuit board assembly 13, while the second inverters 43 of the second stack 41 are arranged on the second circuit board assembly 14, that is, on the axially opposite side of the stator 11 from the first circuit board assembly 13.

Each of the inverters 42, 43 has one or more output terminals 48. These output terminals are connected to one of the field conductors 12 as is shown in fig. 3 in a simplified way with most of the present field conductors 12 omitted. Each field conductor 12 is connected to one output terminal 48 of a first inverter 42 and one output terminal 48 of a second inverter 43. In other words, each field conductor 12 is connected to terminals 48 that are physically close to its respective end by being located on the first or second circuit board assembly 13, 14.

In addition, the first and second inverter 42, 43 that a field conductor 12 is connected to occupy the same position in their respective stack 40, 41 to avoid an uncontrollable DC offset across a field conductor 12.

Fig. 4 gives a more detailed view of the inverters 42, 43 and their connections to the field conductors 12. In the present embodiment, electric drive 10 has a total of 12 field conductors 12 and while fig. 3 omits a number of field conductors 12 all of these and all inverters 42, 43 are shown in fig. 4.

Each of the inverters 42, 43 comprises a series of two capacitors 421 and one or more series of two controllable semiconductor switches 422. Since the electric drive 10 has 12 field conductors 12, the inverters 42, 43 each have two series of two controllable semiconductor switches 422. The midpoints of each of these series including the capacitor series act as output terminals 48 of the inverters 42, 43.

The midpoints of the series of two controllable semiconductor switches 422 are active output terminals and are each connected to exactly one field conductor 12. The midpoints of the capacitor series form passive output terminals and are each connected to more than one field conductor 12. As can be seen from fig. 4, each pair of a first and a second inverter occupying the same position in the stack 40, 41 connects to four field conductors 12.

As the stacks 40, 41 are arranged on the first and second circuit board assembly 13, 14, respectively and thus are arranged on opposite axial sides of the stator 11, they are ideally suited to connect to the field conductors 12 which are bars arranged axially and thus having endpoints near both circuit board assemblies 13, 14. Instead of having a back connection for each to a single circuit board, the only electrical connections across the stator are the two DC link connections 45, 46.

In the setup shown in figure 4, each field conductor 12 would be supplied with 10 V and with three inverters 42, 43 stacked in each of stacks 40, 41 the total supply voltage of the DC link would be 30 V. Comparing with the design shown in US 10,566,922 B2, the setup according to figure 4 is equivalent in terms of number of devices and rating but would not require extra neutral wires.

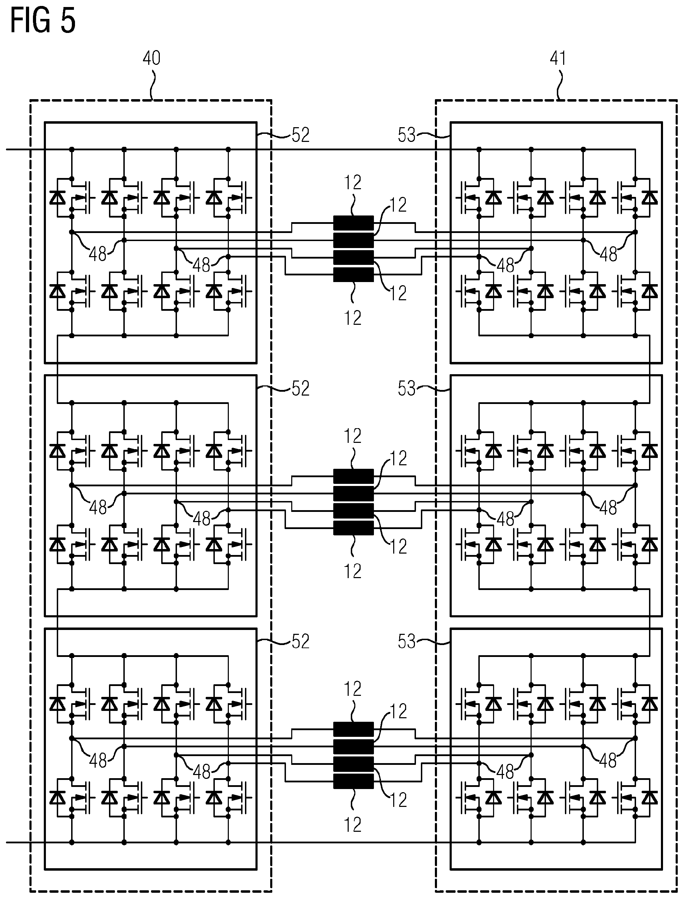

The embodiment shown in figure 4 may be called a half-bridge design. An alternative full-bridge design is shown in figure 5.

In this embodiment the first and second inverters 42, 43 are replaced with third and fourth inverters 52, 53 which comprise one half-bridge of two semiconductor switches 422 for each of the connected field conductors 12, in the present example four such half-bridges. As in figure 4, three of the third inverters 52 form stack 40 and three of the fourth inverters 53 form stack 41. According to this design, each field conductor 12 is connected between one half-bridge on one axial end of the stator 11 and another half-bridge on the other axial end of the stator 11. Contrary to the half-bridge embodiment, the inverters 52, 53 of the full-bridge embodiment would have a rated DC voltage of 5 V to produce 10 V across the field conductors 12 and therefore the supply voltage across the DC link would be 15 V. In the full-bridge design, all output terminals 48 are active output terminals and formed by half-bridges of controllable semiconductor switches 422.

Compared to the full bridge design, the half-bridge design has fewer devices, and while the AC voltage across each field conductor 12 will be lower, this would advantageously allow a higher overall DC link voltage for the same number of groups of field conductors 12. In the present example of a motor with bars instead of windings as field conductors 12 a low voltage is required due to the low inductance of the field conductors 12.

The full-bridge design in turn has no split capacitor and would result in a higher AC voltage for the same DC link voltage, offering possibility of a lower device current, which is an advantage at higher power levels where there are a large number of field conductors 12.

Similar to other converter systems, three phase arrangements offer advantages for cancelling low frequency harmonics and allow reduced DC link capacitor size. A single-phase arrangement is possible but would require a large capacitor volume. Increasing the number of phases above three offers further but diminishing benefits. The optimal number of phase groups will depend on the total number of poles, i.e., field conductors 12 and the power rating of the electric drive 10.

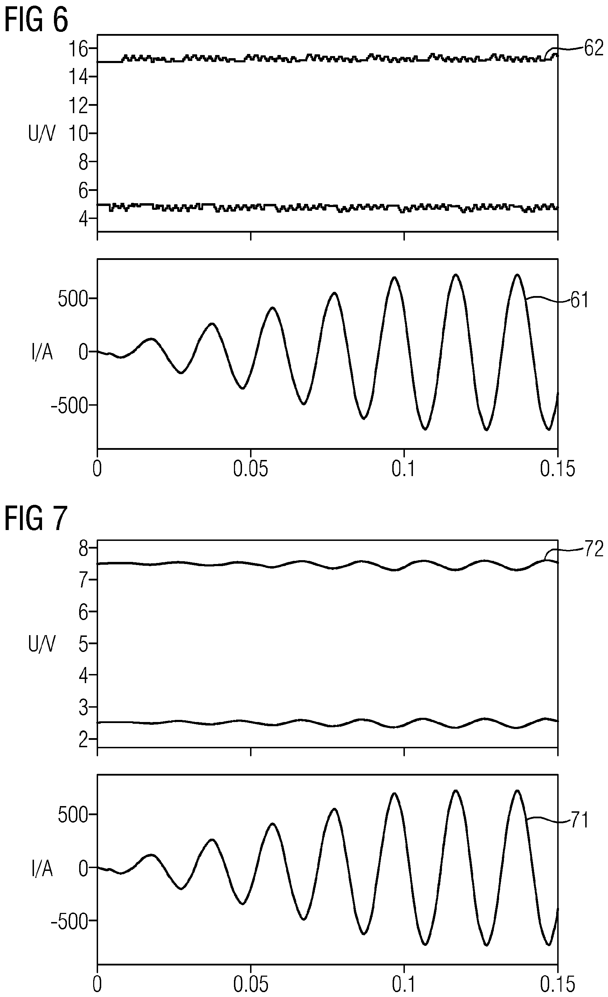

For both the half-bridge design and the full-bridge design simulation models were made. The models were based on a 30 kW drive connected to a 24-pole motor. The output voltage of the drive was 10 V (peak to peak phase voltage). It is noted that this motor requires a comparatively high peak current of 3 kA. The 24 poles were split into three pole-groups at three different voltage levels. In the case of the half-bridge design then each voltage level would have 10 V and the total supply voltage is 30 V. Figure 6 shows the simulated current 61 and voltage 62 of a single field conductor 12 for the half-bridge design, while figure 7 shows the simulated current 71 and voltage 72 of a single field conductor 12 for the full-bridge design.

The figures 6 and 7 show that both converters successfully provide the required current to the motor. The half-bridge design has higher switching harmonics for the current but allows a higher cell voltage, thus reducing the current from the supply.

### List of reference numbers

- 10: electric drive
- 11: stator
- 12: field conductor
- 13, 14: circuit board assembly
- 15: circuit board
- 40, 41: inverter stacks
- 42, 43: first, second inverters
- 421: capacitors
- 422: semiconductor switches
- 45, 46: DC link connections
- 48: field conductor terminals
- 52, 53: third, fourth inverters
- 61, 71: current
- 62, 72: voltage

## Claims

1. An electric drive (10) comprising
- a rotor,
- a stator (11) having a plurality of field conductors (12) for generating a magnetic field for conveying a torque to the rotor,
- one or more inverters (42, 52) comprising two DC terminals and at least two field conductor terminals (48) each, wherein each field conductor terminal is connected to a first terminal of one or more of the field conductors (12) and wherein the inverters (42, 52) are arranged at a first axial end of the stator (11),
wherein one or more second inverters (43, 53) comprise two DC terminals and at least two second field conductor terminals (48) each, wherein each second field conductor terminal is connected to a second terminal of one or more of the field conductors (12) and wherein the second inverters (43, 53) are arranged at a second axial end of the stator (11), the second axial end being opposite the first axial end,
wherein the first and second inverters (52, 53) each comprise two or more half-bridges of controllable semiconductor switches (422), wherein the half-bridges are arranged between the DC terminals and in a parallel connection and wherein the midpoint of the half-bridges each form a field conductor terminal,
**characterized in that** for each field conductor (12), a first of the connected half-bridges of controllable semiconductor switches (422) is operated with pulse width modulation switching and a second of the connected half-bridges of controllable semiconductor switches is switched at a fundamental frequency of the AC output of the inverters (52, 53).

2. The electric drive (10) of claim 1, wherein the first and second inverters (42, 43) each comprise one or more half-bridges of controllable semiconductor switches (422) and one capacitor series of two capacitors (421), wherein the half-bridges and the capacitor series are arranged between the DC terminals and in a parallel connection and wherein the midpoint of the half-bridges and the midpoint of the capacitor series each form a field conductor terminal.

3. The electric drive (10) of any of the preceding claims with an equal number of field conductors (12), field conductor terminals (48) and second field conductor terminals (48).

4. The electric drive (10) of any of the preceding claims, wherein the field conductors (12) are bars, particularly bars that are physically arranged in parallel.

5. The electric drive (10) of any of the preceding claims comprising at least six, particularly at least 12, particularly at least 24 field conductors (12).

6. The electric drive (10) of any of the preceding claims comprising at least two of said inverters (42, 52) and an equal number of said second inverters (43, 53), wherein said inverters (42, 52) form a first series (40) with their DC terminals and wherein said second inverters (43, 53) form a second series (41) with their DC terminals.

7. The electric drive (10) of claim 6 wherein each field conductor (12) is connected between a field conductor terminal (48) of an inverter (42, 52) and a second field conductor terminal (48) of a second inverter (43, 53), wherein the inverter (42, 52) and second inverter (43, 53) occupy the same position in their respective series (40, 41).

8. The electric drive (10) of claim 7 comprising an AC/DC converter arrangement, wherein the DC terminals of the AC/DC converter arrangement are connected to DC terminals of said series (40) of inverters (42, 52) and said series (41) of second inverters (43, 53).

9. The electric drive (10) of any of the preceding claims wherein the AC/DC converter arrangement comprises two AC/DC converters (32, 33) arranged in parallel and connected to a multi-winding transformer (31) with their AC terminals.

## Patentansprüche

1. Elektrischer Antrieb (10), umfassend
- einen Rotor,
- einen Stator (11) mit einer Vielzahl von Feldleitern (12) zum Erzeugen eines Magnetfeldes zum Übertragen eines Drehmoments auf den Rotor,
- einen oder mehrere Wechselrichter (42, 52), umfassend zwei DC-Anschlüsse und jeweils mindestens zwei Feldleiteranschlüsse (48), wobei jeder Feldleiteranschluss mit einem ersten Anschluss eines oder mehrerer der Feldleiter (12) verbunden ist, und wobei die Wechselrichter (42, 52) an einem ersten axialen Ende des Stators (11) angeordnet sind,
wobei ein oder mehrere zweite Wechselrichter (43, 53) zwei DC-Anschlüsse und jeweils mindestens zwei zweite Feldleiteranschlüsse (48) umfassen, wobei jeder zweite Feldleiteranschluss mit einem zweiten Anschluss eines oder mehrerer der Feldleiter (12) verbunden ist, und wobei die zweiten Wechselrichter (43, 53) an einem zweiten axialen Ende des Stators (11) angeordnet sind, wobei das zweite axiale Ende dem ersten axialen Ende gegenüberliegt,
wobei die ersten und zweiten Wechselrichter (52, 53) jeweils zwei oder mehr Halbbrücken aus steuerbaren Halbleiterschaltern (422) umfassen, wobei die Halbbrücken zwischen den DC-Anschlüssen und in einer Parallelverbindung angeordnet sind, und wobei der Mittelpunkt der Halbbrücken jeweils einen Feldleiteranschluss bildet,
**dadurch gekennzeichnet, dass**
für jeden Feldleiter (12), eine erste der verbundenen Halbbrücken aus steuerbaren Halbleiterschaltern (422) mit Pulsweitenmodulationsschaltung betrieben wird und eine zweite der verbundenen Halbbrücken aus steuerbaren Halbleiterschaltern mit einer Grundfrequenz des AC-Ausgangs der Wechselrichter (52, 53) geschaltet wird.

2. Elektrischer Antrieb (10) nach Anspruch 1, wobei die ersten und zweiten Wechselrichter (42, 43) jeweils eine oder mehrere Halbbrücken aus steuerbaren Halbleiterschaltern (422) und eine Kondensatorreihe aus zwei Kondensatoren (421) umfassen, wobei die Halbbrücken und die Kondensatorreihe zwischen den DC-Anschlüssen und in einer Parallelverbindung angeordnet sind, und wobei der Mittelpunkt der Halbbrücken und der Mittelpunkt der Kondensatorreihe jeweils einen Feldleiteranschluss bilden.

3. Elektrischer Antrieb (10) nach einem der vorhergehenden Ansprüche mit einer gleichen Anzahl von Feldleitern (12), Feldleiteranschlüssen (48) und zweiten Feldleiteranschlüssen (48).

4. Elektrischer Antrieb (10) nach einem der vorhergehenden Ansprüche, wobei die Feldleiter (12) Stäbe sind, insbesondere Stäbe, die physisch parallel angeordnet sind.

5. Elektrischer Antrieb (10) nach einem der vorhergehenden Ansprüche, umfassend mindestens sechs, insbesondere mindestens 12, insbesondere mindestens 24 Feldleiter (12).

6. Elektrischer Antrieb (10) nach einem der vorhergehenden Ansprüche, umfassend mindestens zwei der Wechselrichter (42, 52) und eine gleiche Anzahl der zweiten Wechselrichter (43, 53), wobei die Wechselrichter (42, 52) eine erste Reihe (40) mit ihren DC-Anschlüssen bilden und wobei die zweiten Wechselrichter (43, 53) eine zweite Reihe (41) mit ihren DC-Anschlüssen bilden.

7. Elektrischer Antrieb (10) nach Anspruch 6, wobei jeder Feldleiter (12) zwischen einem Feldleiteranschluss (48) eines Wechselrichters (42, 52) und einem zweiten Feldleiteranschluss (48) eines zweiten Wechselrichters (43, 53) verbunden ist, wobei der Wechselrichter (42, 52) und der zweite Wechselrichter (43, 53) die gleiche Position in ihrer jeweiligen Reihe (40, 41) einnehmen.

8. Elektrischer Antrieb (10) nach Anspruch 7, umfassend eine AC/DC-Wandleranordnung, wobei die DC-Anschlüsse der AC/DC-Wandleranordnung mit DC-Anschlüssen der Reihe (40) von Wechselrichtern (42, 52) und der Reihe (41) von zweiten Wechselrichtern (43, 53) verbunden sind.

9. Elektrischer Antrieb (10) nach einem der vorhergehenden Ansprüche, wobei die AC/DC-Wandleranordnung zwei AC/DC-Wandler (32, 33) umfasst, die parallel angeordnet und mit ihren AC-Anschlüssen mit einem Mehrwicklungstransformator (31) verbunden sind.

## Revendications

1. Entraînement électrique (10) comprenant
- un rotor,
- un stator (11) comprenant une pluralité de conducteurs de champ (12) destinés à générer un champ magnétique pour transmettre un couple au rotor,
- un ou plusieurs onduleurs (42, 52) comprenant deux bornes CC et au moins deux bornes de conducteur de champ (48) chacun, où chaque borne de conducteur de champ est connectée à une première borne d'un ou plusieurs des conducteurs de champ (12) et où les onduleurs (42, 52) sont disposés à une première extrémité axiale du stator (11),
où un ou plusieurs deuxièmes onduleurs (43, 53) comprennent deux bornes CC et au moins deux deuxièmes bornes de conducteur de champ (48) chacune, où chaque deuxième borne de conducteur de champ est connectée à une deuxième borne d'un ou plusieurs des conducteurs de champ (12), et où les deuxièmes onduleurs (43, 53) sont disposés à une deuxième extrémité axiale du stator (11), la deuxième extrémité axiale étant opposée à la première extrémité axiale,
où les premier et deuxième onduleurs (52, 53) comprennent chacun deux ou plusieurs demi-ponts de commutateurs à semi-conducteurs commandables (422), où les demi-ponts sont disposés entre les bornes à CC et dans une connexion parallèle, et où les points milieu des demi-ponts forment chacun une borne de conducteur de champ,
**caractérisé en ce que**
pour chaque conducteur de champ (12), un premier des demi-ponts connectés de commutateurs à semi-conducteurs commandables (422) est actionné avec une commutation à modulation de largeur d'impulsion et un deuxième des demi-ponts connectés de commutateurs à semi-conducteurs commandables est commuté à une fréquence fondamentale de la sortie CA des onduleurs (52, 53).

2. Entraînement électrique (10) selon la revendication 1, dans lequel les premier et deuxième onduleurs (42, 43) comprennent chacun un ou plusieurs demi-ponts de commutateurs à semi-conducteurs commandables (422) et une série de deux condensateurs (421), les demi-ponts et la série de condensateurs étant disposés entre les bornes CC et en parallèle, et le point milieu des demi-ponts et le point milieu de la série de condensateurs formant chacun une borne de conducteur de champ.

3. Entraînement électrique (10) selon l'une quelconque des revendications précédentes, comportant un nombre égal de conducteurs de champ (12), de bornes de conducteurs de champ (48) et de deuxièmes bornes de conducteurs de champ (48).

4. Entraînement électrique (10) selon l'une quelconque des revendications précédentes, dans lequel les conducteurs de champ (12) sont des barres, en particulier des barres qui sont disposées physiquement en parallèle.

5. Entraînement électrique (10) selon l'une quelconque des revendications précédentes, comprenant au moins six, en particulier au moins 12, en particulier au moins 24 conducteurs de champ (12).

6. Entraînement électrique (10) selon l'une quelconque des revendications précédentes, comprenant au moins deux desdits onduleurs (42, 52) et un nombre égal desdits deuxièmes onduleurs (43, 53), où lesdits onduleurs (42, 52) forment une première série (40) avec leurs bornes CC, et où lesdits deuxièmes onduleurs (43, 53) forment une deuxième série (41) avec leurs bornes CC.

7. Entraînement électrique (10) selon la revendication 6, dans lequel chaque conducteur de champ (12) est connecté entre une borne de conducteur de champ (48) d'un onduleur (42, 52) et une deuxième borne de conducteur de champ (48) d'un deuxième onduleur (43, 53), où le premier onduleur (42, 52) et le deuxième onduleur (43, 53) occupent la même position dans leurs séries respectives (40, 41).

8. Entraînement électrique (10) selon la revendication 7, comprenant un dispositif convertisseur CA/CC, où les bornes CC du dispositif convertisseur CA/CC sont connectées à des bornes CC de ladite série (40) d'onduleurs (42, 52) et de ladite série (41) de deuxièmes onduleurs (43, 53).

9. Entraînement électrique (10) selon l'une quelconque des revendications précédentes, dans lequel le dispositif convertisseur CA/CC comprend deux convertisseurs CA/CC (32, 33) disposés en parallèle et connectés à un transformateur à enroulements multiples (31) par leurs bornes CA.
